# EUROPEAN PATENT SPECIFICATION

(11) **EP 2 846 025 B1**
(45) Date of publication and mention of the grant of the patent: **04.10.2017**
(21) Application number: 14182922.6
(22) Date of filing: 29.08.2014
(51) Int. Cl.: F02D 41/02

(54) **Engine control device**
Motorsteuerungsgerät
Dispositif de commande d'un moteur

(30) Priority: 04.09.2013 JP 2013183068
(43) Date of publication of application: 11.03.2015
(73) Proprietor: Mitsubishi Jidosha Kogyo K.K., Tokyo 108-8410 (JP)
(72) Inventor: Miyamoto, Katsuhiko, Tokyo, Tokyo 108-8410 (JP)
(74) Representative: Vossius & Partner Patentanwälte Rechtsanwälte mbB

(56) References cited:
- WO-A1-2014/055018
- WO-A2-01/53664
- US-A1- 2008 202 095
- US-B2- 7 021 051
- US-B2- 7 216 479
- US-B2- 7 370 470

## Description

### BACKGROUND

### 1. Technical Field

The present invention relates to an engine control device that is capable of quickly activating an exhaust gas purifying device after the start of the engine.

### 2. Background Art

With the aim of purifying the exhaust gas discharged from an engine of an automobile or the like prior to releasing the exhaust gas to the atmosphere, an exhaust gas purifying device is provided in the middle of an exhaust path.

As the exhaust gas purifying device, a three-way catalyst using platinum, palladium or rhodium or the like is generally used in order to remove hydrocarbons (HC), carbon monoxide (CO) and nitrogen oxides (NOx) or the like, which are harmful substances contained in the exhaust gas, for example. Further, in a diesel engine using light oil as a fuel, a diesel particulate filter is used in order to remove particulate matters (PM) which are harmful substances contained in the exhaust gas.

These exhaust gas purifying devices are activated when reaching a temperature above a certain level and exhibit a predetermined exhaust gas purification function. Therefore, it is desirable to activate the exhaust gas purifying device as early as possible by quickly raising the temperature of the exhaust gas after the start of an engine.

As a method of quickly raising the temperature of the exhaust gas after the start of an engine, there are techniques disclosed in Patent Documents 1 and 2, for example. In these techniques, combustion is carried out at a timing closer to an exhaust stroke in a combustion chamber by delaying (retarding) an ignition timing after the start of an engine in a cold condition, so that the exhaust gas with a high temperature is directed to the exhaust gas purifying device. Further, in order to prevent a decrease in output of an engine due to the retard of the ignition timing, the ignition timing is appropriately adjusted in accordance with a subsequent operating state of the engine.

Further, in Patent Document 3, in case where the temperature of an exhaust gas purifying device for a diesel engine is low, an exhaust brake is used and the control of the fuel injection corresponding to the exhaust brake is performed for the purpose of quickly raising the temperature of the exhaust gas from the engine. In this way, abnormal combustion or overheating is prevented. The exhaust brake increases the exhaust pressure by applying a large resistance to the flow of the exhaust gas and serves as an auxiliary brake by applying a resistance to the rotation of the engine. Patent Document 4 (WO 0153664) is a relevant prior art that discloses an engine method control to increase exhaust temperature.

Patent Document 1: JP-A-6-213125
Patent Document 2: JP-B-4-011741
Patent Document 3: JP-A-2007-205223

According to the engine control devices disclosed in Patent Documents 1 and 2, the combustion timing is sometimes close to the combustion stability limit on the delay side when the ignition timing is delayed in a saturation state (a state where no more intake air can be introduced) of torque control air quantity. Therefore, depending on an operating state, there is a limitation in the temperature rise control of the exhaust gas by the delay of the ignition timing.

Further, in the case of increasing the supply amount of fuel or air in an attempt to secure a high exhaust gas temperature while maintaining the delay of the ignition timing, a feeling (e.g., a state where a vehicle tries to move forward though an accelerator is not stepped) of starting to run occurs in the vehicle and therefore a driver can sometimes feel the uncomfortable feeling of running. Further, in this case, when an engine torque is controlled by adjusting an amount of air in order to suppress the feeling of starting to run, torque is suppressed and exhaust energy is reduced. Accordingly, there is a possibility that the temperature of the exhaust gas purifying device falls below a predetermined activation temperature.

Furthermore, the technique disclosed in Patent Document 3 can be applied only to a vehicle equipped with a diesel engine having an exhaust brake, but cannot be applied to a vehicle equipped with a gasoline engine or other vehicles having no exhaust brake. Further, since the exhaust brake applies a large resistance to the flow of the exhaust gas, the amount of the exhaust gas flowing into the exhaust gas purifying device is reduced, which can be a obstacle to temperature rise.

Therefore, an object of the present invention is to quickly activate an exhaust gas purifying device in various vehicles equipped with a gasoline engine or a diesel engine by quickly raising the temperature of the exhaust gas without sacrificing engine performance and without giving an uncomfortable feeling of running to a driver.

### SUMMARY OF THE INVENTION

(1) According to an aspect of the invention, an engine control device includes an operating state determination unit that determines an operating state of an engine mounted on a vehicle, an exhaust gas temperature detection unit that detects the temperature of the exhaust gas of the engine, a braking unit that applies a braking force to a running torque transmitted to the vehicle from the engine, an exhaust gas temperature control unit that controls the supply of fuel and air into a combustion chamber and an ignition timing so as to raise the temperature of the exhaust gas up to the temperature required for the activation of an exhaust gas purifying device when the operating state determination unit determines that an elapsed time after the start of the engine is within a predetermined period of time, and a braking control unit that operates the braking unit so as to cause the running torque of the vehicle to be close to a running torque of the vehicle that is assumed in the state where a temperature rise control is not performed, when the exhaust gas temperature control unit performs the temperature rise control of the exhaust gas.
(2) In the engine control device of (1), the temperature rise control of the exhaust gas by the exhaust gas temperature control unit is performed when an accelerator opening is a first predetermined value or less.
(3) In the engine control device of (1) the vehicle includes an inclination detection unit that detects the inclination in the longitudinal direction of the vehicle, and the braking unit applies a braking force to the vehicle depending on the gradient situation in an advancing direction of the vehicle, which is detected by the inclination detection unit, when the exhaust gas temperature control unit performs the temperature rise control of the exhaust gas.
(4) In the engine control device of (3), when the exhaust gas temperature control unit performs the temperature rise control of the exhaust gas, the exhaust gas temperature control unit advances the ignition timing when the inclination detection unit detects inclination of an upward gradient of a second predetermined value or greater in the advancing direction of the vehicle in a state where the exhaust gas temperature control unit delays the ignition timing.
(5) In the engine control device of (3) or (4), when the exhaust gas temperature control unit performs the temperature rise control of the exhaust gas, the braking unit applies a braking force to the vehicle when the inclination detection unit detects inclination of downward gradient or horizontal state to the advancing direction of the vehicle.
(6) In the engine control device of any one of (1) to (5), when the exhaust gas temperature control unit performs the temperature rise control of the exhaust gas, the braking unit applies a braking force to the vehicle when the operating state determination unit determines that a running speed of the vehicle is a third predetermined value or greater.
(7) In the engine control device of any one of (1) to (6), when the exhaust gas temperature control unit performs the temperature rise control of the exhaust gas, the braking unit applies a braking force to the vehicle when the operating state determination unit determines that an acceleration of the vehicle is a fourth predetermined value or greater.
(8) In the engine control device of any one of (1) to (7), the braking unit is a braking system by a brake-by-wire.

According to the present invention, when the control is performed for raising the temperature of the exhaust gas up to the temperature required for the activation of an exhaust gas purifying device after the start of an engine, the braking means is operated such that a running torque of a vehicle is close to a running torque of a vehicle that is assumed in the state where the temperature rise control is not performed. Therefore, it is possible to suppress the running torque of the vehicle while maintaining the output of the engine and the temperature of the exhaust gas, by the temperature rise control of the exhaust gas. Namely, it is possible to quickly activate an exhaust gas purifying device by quickly raising the temperature of the exhaust gas without sacrificing engine performance and without giving an uncomfortable feeling of running to a driver.

### BRIEF DESCRIPTION OF DRAWINGS

Fig. 1 is a schematic view of a vehicle and an engine control device according to an illustrative embodiment of the present invention.
Fig. 2 is a front sectional view showing a main portion of an engine in the illustrative embodiment.
Fig. 3 is a graph showing the status of the control such as fuel injection timing, ignition timing, fuel pressure in the fuel injection and an engine speed.
Fig. 4 is a flow chart showing the control of the engine control device of the present invention.

### DESCRIPTION OF EMBODIMENT

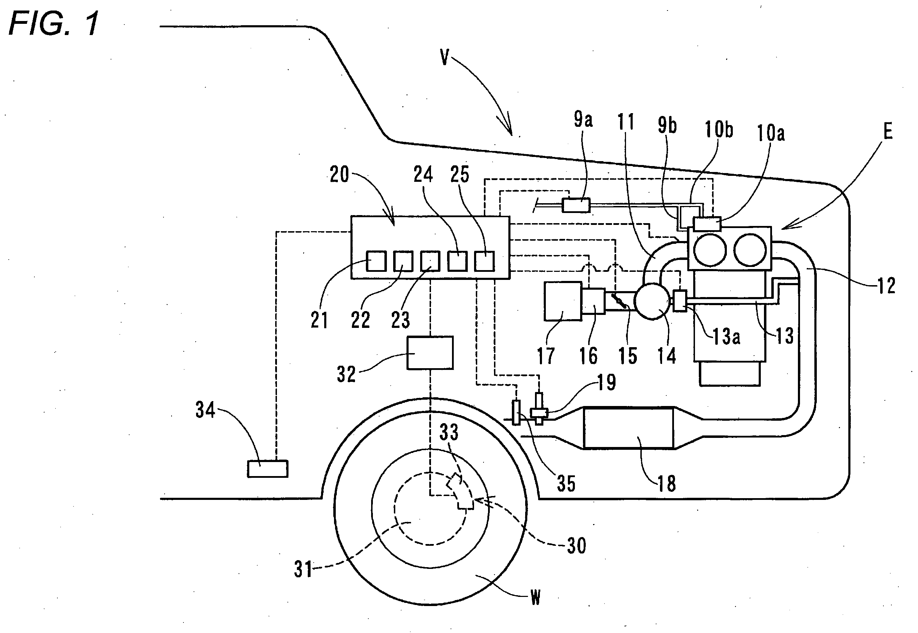

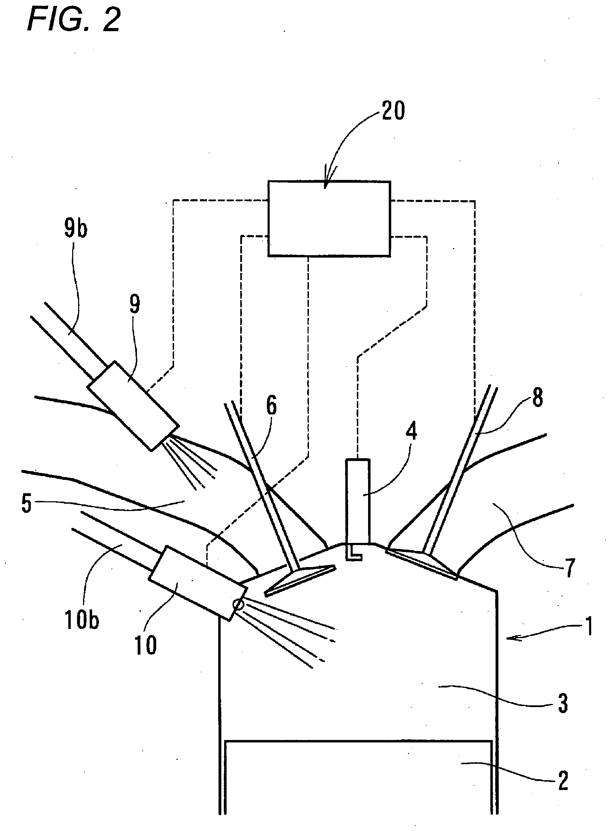

Hereinafter, an illustrative embodiment of the present invention will be described with reference to the drawings. Fig. 1 is a schematic view conceptually showing configurations of an engine control device of the illustrative embodiment and a vehicle V equipped with the engine control device. Further, Fig. 2 is a front sectional view showing a main portion of an engine E.

As shown in Fig. 1 and Fig. 2, an intake manifold 11 is provided in an intake passage of the engine E and adapted to introduce an air-fuel mixture into a combustion chamber 3 through an intake port 5. Further, toward the downstream side from the upstream side of the intake passage, an air cleaner 17, an airflow sensor 16 for detecting an amount of intake air so as to obtain a predetermined air-fuel ratio, a throttle valve 15 for controlling the flow rate of intake air by changing a sectional area of a passage and a surge tank 14 for reducing the flow rate by temporarily storing the inflow of excessive intake air or the like are provided in order.

By an exhaust manifold 12, an exhaust passage of the engine E is drawn from the combustion chamber 3 of the engine E through an exhaust port 7 (see Fig. 2).

An exhaust gas purifying device 18 is provided in the middle of the exhaust passage of the engine E and a muffler (not shown) as a silencer is provided on the downstream side of the exhaust gas purifying device 18.

A temperature detecting means 35 is provided at the downstream end of the exhaust gas purifying device 18 and adapted to detect the temperature of the exhaust gas purifying device 18, i.e., the temperature of the exhaust gas. In the present embodiment, the temperature detecting means 35 is a temperature sensor for measuring the temperature of the exhaust gas or members around the exit of a three-way catalyst. Specifically, the temperature of the exhaust gas purifying device 18 obtained by the temperature detecting means 35 is equivalent to the temperature of the exhaust gas and information on the temperature is transmitted via a cable to a control means 25 that is provided in an electronic control unit (ECU) 20 for controlling the engine E.

Further, an air-fuel ratio sensor 19 is provided at the downstream end of the exhaust gas purifying device 18. Information on the air-fuel ratio obtained by the air-fuel ratio sensor 19 is similarly transmitted to the control means 25 of the electronic control unit 20.

The exhaust passage upstream of the exhaust gas purifying device 18 and the space of the intake passage inside the surge tank 14 are connected to each other by an exhaust gas recirculation passage 13. The exhaust gas recirculation passage 13 is opened and closed by an exhaust gas recirculation valve 13a and a portion of the exhaust gas is recirculated into the intake passage as a recirculation gas. Opening and closing of the exhaust gas recirculation valve 13a is controlled by the control means 25 of the electronic control unit 20.

In the present embodiment, the exhaust gas purifying device 18 is a three-way catalyst having a function of purifying (removing) the hydrocarbons and nitrogen oxides or the like, which are included in the exhaust gas, when the exhaust gas passes through the catalyst. Further, although a gasoline engine is employed in the present embodiment, a diesel engine may be used. In this case, an oxidation catalyst or a DPF (Diesel Particulate Filter) is used.

These exhaust gas purifying devices 18 have temperature conditions that are effective in the purification of the exhaust gas. In the case where the temperature of the catalyst or filter is equal to or higher than the activation temperature that is specific to the catalyst or filter, the purification of harmful substances is favorably performed, as long as the temperature is not an abnormally high temperature that is not a normal operation condition.

The vehicle V is provided with a braking means 30 for applying a braking force to the vehicle V. The braking means 30 is a brake system by a brake-by-wire, which is provided with a brake disc 31 rotating integrally with a wheel W, a brake caliper 33 sandwiching the brake disc 31 through a brake pad, and a brake actuator 32 for applying a pressing force to the brake caliper 33.

Based on the electrical commands from a braking control means 23 provided in the electronic control unit 20, the brake actuator 32 is operated and the brake disc 31 is pressed by the brake pad from the front and back sides, so that a predetermined braking force is applied. Further, the adjustment of the pressing force and the release of the braking are similarly performed on the basis of the electrical commands from the braking control means 23 provided in the electronic control unit 20.

Further, the electronic control unit 20 includes an operating state determination means 21 for determining an operating state of the engine E mounted on the vehicle V.

The operating state determination means 21 obtains information on the temperature of the cooling water from the engine E and information on an engine speed and an engine load or the like and utilizes the obtained information to control the engine E. The operating state determination means 21 can obtain information on whether the engine E is in a cold condition or in a state after warm-up. Further, the operating state determination means 21 can obtain an elapsed time after the start of the engine E in the cold condition using a timer.

An intake valve 6 and an exhaust vale 8, an ignition plug 4, a port injection valve 9 as a fuel injection device, a cylinder injection valve (direct injection valve) 10, a fuel pump 9a for feeding fuel to the fuel injection device through a fuel pipe 9b and a high-pressure fuel pump 10a for feeding fuel to the direct injection valve 10 through a fuel pipe 10b, and other equipment required for the operation of the engine are controlled, through cables, by the control means 25 provided in the electronic control unit 20, respectively. In the present embodiment, a portion of a computer of the electronic control unit 20 is used as the control means 25.

The electronic control unit 20 includes an exhaust gas temperature control means 22. The exhaust gas temperature control means 22 controls the ignition timing and the supply of fuel and air into the combustion chamber 3 so as to raise the temperature of the exhaust gas up to the temperature required for the activation of the exhaust gas purifying device 18 when the operating state determination means 21 determines that an elapsed time after the start of the engine E is within a predetermined period of time.

In order to quickly raise the temperature of the exhaust gas especially when the engine E is started in a cold condition, the exhaust gas temperature control means 22 performs a control that secures a high exhaust gas temperature by increasing the amount of fuel and air supplied into the combustion chamber 3 or increases the exhaust gas temperature by delaying the ignition timing. Hereinafter, the control on the temperature rise of the exhaust gas by the exhaust gas temperature control means 22 is referred to as a temperature rise control. The control by the exhaust gas temperature control means 22 is carried out on the basis of the information from the operating state determination means 21.

Further, when the temperature rise control of the exhaust gas is performed by the exhaust gas temperature control means 22, the braking control means 23 operates the braking means 30 such that a running torque of the vehicle V is close to a running torque of the vehicle V that is assumed in the state where the operating conditions are the same and the temperature rise control is not performed.

The running torque of the vehicle V means the magnitude of a force that causes the vehicle V to move toward the running direction. Therefore, it is possible to suppress an increase in the running torque of the vehicle V by operating the braking means 30 even when the generated torque of the engine E is increased due to the temperature rise control. Information on the running torque of the vehicle V can be acquired by a running torque detection means provided in the middle of a driving force transmitting path of the vehicle V. Further, the running torque of the vehicle V may be acquired by the calculation of the electronic control unit 20 based on information such as the speed and inclination of the vehicle V and the operating state of the engine E. Specifically, the electronic control unit 20 stores information on the engine torque as a map of volume efficiency and engine speed. Actual torque can be calculated by performing the temperature correction or density correction of air on the values stored in the electronic control unit 20.

Meanwhile, a running torque of the vehicle V that is assumed in the state where the temperature rise control is not performed is calculated by the calculation of the electronic control unit 20, using past running data as a database and based on the information of the running situation at that time.

Here, the temperature rise control of the exhaust gas by the exhaust gas temperature control means 22 is performed when the accelerator opening is a first predetermined value A or less. The temperature rise control is not performed when the accelerator opening is greater than the first predetermined value A.

Further, the vehicle V includes an inclination detection means 34 for detecting inclination in the longitudinal direction of the vehicle V. The inclination detection means 34 detects whether the vehicle V is in a horizontal state or has an upward or downward gradient toward the running direction of the vehicle V. The inclination detection means 34 transmits information on the inclination to an inclination information acquiring means 24 of the electronic control unit 20. During the temperature rise control by the exhaust gas temperature control means 22, the braking control means 23 determines whether it is necessary or not to apply a braking force to the vehicle V via the braking means 30, depending on the gradient situation in an advancing direction of the vehicle, which is detected by the inclination detection means 34. The braking control means 23 transmits an instruction when braking is required.

Further, during the temperature rise control according to the retard of the ignition timing by the exhaust gas temperature control means 22, the exhaust gas temperature control means 22 advances the ignition timing and secures the power required for the climbing of the vehicle V when the inclination detection means 34 detects inclination of an upward gradient of a second predetermined value B or greater in a predetermined advancing direction of the vehicle. This is a determination for taking priority on the climbing by temporarily suspending or temporarily suppressing the temperature rise, since it is difficult to secure the torque required for the climbing of the vehicle in a state where the ignition timing is delayed.

Further, during the temperature rise control by the exhaust gas temperature control means 22, the braking means 30 is adapted to apply a braking force to the vehicle V when the inclination detection means 34 detects inclination of a downward gradient or a horizontal state in a running direction of the vehicle. Since a required torque for the engine E is relatively small when the vehicle V is running on a road of a downward gradient or a horizontal state, quantity of exhaust heat is reduced and therefore the temperature of the exhaust gas is lowered. Accordingly, in this case, the temperature of the exhaust gas is increased by forcibly applying a braking force using the brake-by-wire to increase a running resistance of the vehicle and operating the engine E in a higher load state.

The forcible braking is carried out independently of a normal brake operation (a brake pedal stepping operation) that is performed by a driver. A normal brake device that is operated by a driver may be the same system as the braking means by the brake-by-wire giving a forcible braking force or a braking means that has a separate system using the brake-by-wire or hydraulic circuit or the like.

Furthermore, during the temperature rise control by the exhaust gas temperature control means 22, the braking means 30 is adapted to apply a braking force to the vehicle V when it is determined by the operating state determination means 21 that a running speed of the vehicle V is a third predetermined value C or greater. Further, during the temperature rise control, the braking means 30 is adapted to apply a braking force to the vehicle V when it is determined by the operating state determination means 21 that an acceleration of the vehicle V is a fourth predetermined value D or greater.

In the case of regulating the braking by the running speed and the acceleration, both the regulation of the braking by the running speed and the regulation of the braking by the acceleration can be carried out or only one regulation can be carried out.

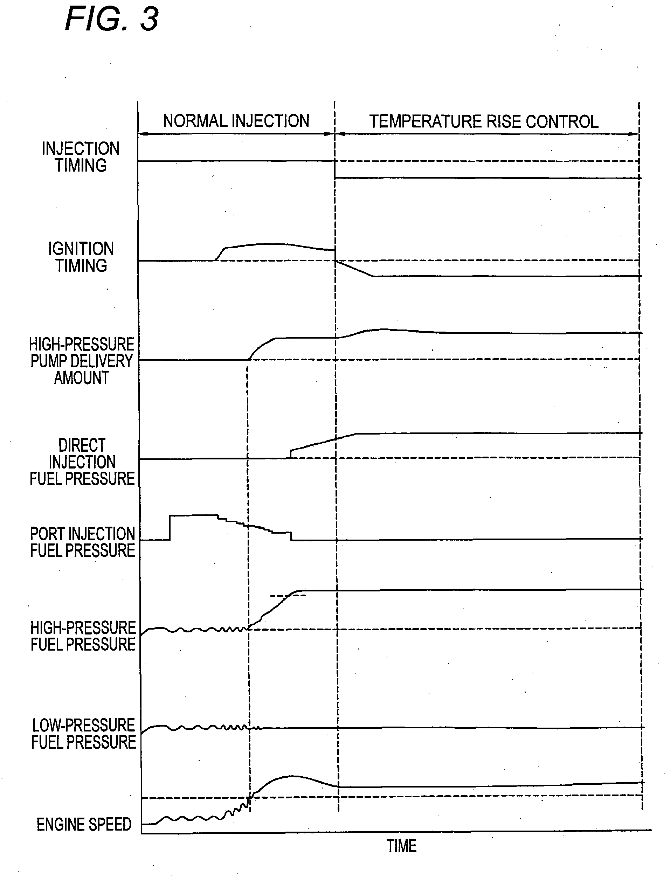

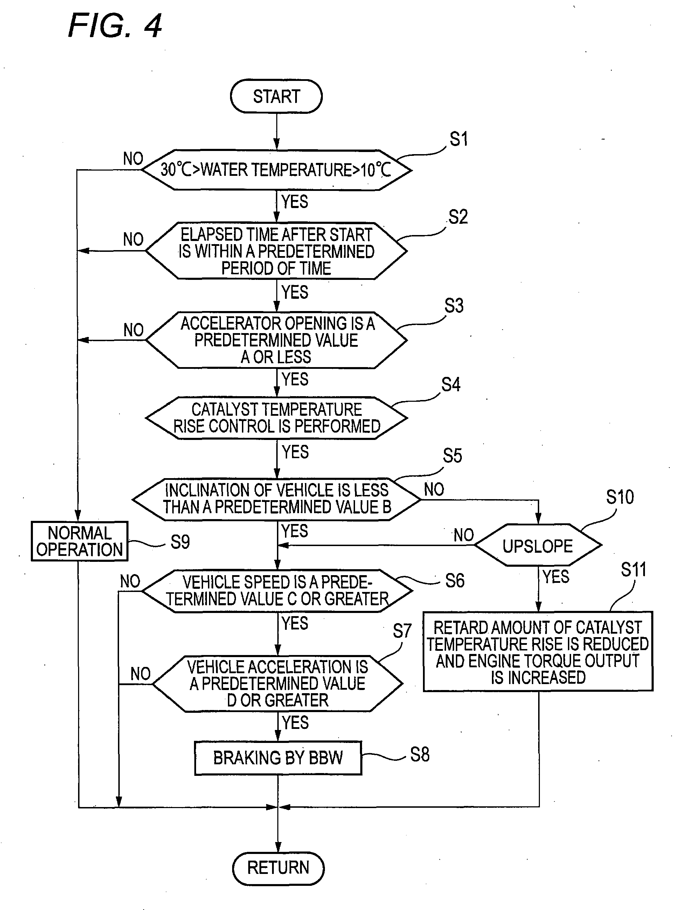

An operation of the engine control device and a control method therefor will be described with reference to a graph of Fig. 3 and a flowchart of Fig. 4.

The engine E is operated by the introduction of the air-fuel mixture from the intake manifold 11 and exhaust gas from the combustion chamber 3 is discharged through the exhaust manifold 12. The exhaust gas reaches the exhaust gas purifying device 18 through an exhaust passage. Further, a portion of the exhaust gas is recirculated to an intake passage though the exhaust gas recirculation passage 13.

Here, as shown in Step S1 of Fig. 4, when the electronic control unit 20 determines that the water temperature of the cooling water from the engine is higher than 10°C but lower than 30°C, the process proceeds to Step S2. In Step S2, it is determined whether an elapsed time after the start of the engine is within a predetermined period of time or not.

When the water temperature is not higher than 10°C or not lower than 30°C or when the elapsed time after the start of the engine has elapsed the predetermined period of time, the temperature rise control of the exhaust gas is not performed and a normal running is performed (see Step S9).

When the water temperature is higher than 10°C but lower than 30°C and when the elapsed time after the start of the engine is within the predetermined period of time, the process proceeds to Step S3.

In Step S3, it is determined whether the accelerator opening is equal to or less than the first predetermined value A or not. When the accelerator opening is equal to or less than the first predetermined value A, the process proceeds to Step S4. This case also includes a case where the accelerator opening is zero (i.e., a state where an accelerator is not stepped). When the accelerator opening is greater than the first predetermined value A, the temperature rise control is not performed and the normal running is performed (see Step S9).

In Step S4, the temperature rise control is performed by the exhaust gas temperature control means 22. As a method of performing the temperature rise control, it is possible to employ a method of securing a high exhaust gas temperature by increasing the amount of air and fuel supplied to the combustion chamber 3 or a method of raising the exhaust gas temperature by delaying the ignition timing. Depending on an operating state, either of the method of increasing the amount of air and fuel or the method of delaying the ignition timing can be selectively performed or both methods can be performed in combination.

An example of the temperature rise control is shown in Fig. 3. A left side of Fig. 3 shows the state of normal injection (the state of normal operation) and a right side of Fig. 3 shows the state of the temperature rise control.

Fuel injection timing is retarded in the state of the temperature rise control, as compared to the state of the normal injection. Although a combination of the port injection valve 9 and the direct injection valve 10 is used in the present embodiment, the foregoing may be similarly applied to the case where the engine E includes only one fuel injection device, i.e., the engine E includes only the port injection valve 9 or only the direct injection valve 10.

Similarly, ignition timing is retarded in the state of the temperature rise control, as compared to the state of the normal injection. With the retard of the ignition timing, it is possible to increase the temperature of the exhaust gas.

A fuel delivery amount (high-pressure pump delivery amount) by the high-pressure fuel pump 10a, a fuel pressure (direct injection fuel pressure) of the direct injection valve 10, a fuel pressure (port injection fuel pressure) of the port injection valve 9, a fuel pressure (high-pressure fuel pressure) of the high-pressure fuel pipe 10b, a fuel pressure (low-pressure fuel pressure) of the low-pressure fuel pipe 9b and the engine speed are shown in the graph. In the temperature rise control, the fuel pressure by the direct injection valve 10 and the high-pressure fuel pressure are increased, so that the amount of fuel supplied into the combustion chamber 3 is increased. Thereby, high power, high engine torque and high exhaust gas temperature are secured.

Next, in Step S5, inclination of the vehicle V is determined by the inclination detection means 34. Specifically, it is determined whether the vehicle V has a certain degree of inclination or is in a horizontal state.

When it is detected in Step S5 that the inclination is a second predetermined value B or greater, the process proceeds to Step S10. When it is detected in Step S10 that the inclination is an upward gradient of the second predetermined value B or greater in an advancing direction of the vehicle, the process proceeds to Step S11. Specifically, when the vehicle V is running on a steep uphill which has a constant gradient or greater, the exhaust gas temperature control means 22 advances the ignition timing by temporarily releasing the temperature rise control and secures the power required for the climbing of the vehicle V even in the state where the ignition timing is delayed by the exhaust gas temperature control means 22 in the middle of performing the temperature rise control of the exhaust gas by the exhaust gas temperature control means 22.

Further, when the inclination is not an upward gradient of the second predetermined value B or greater, i.e., when the vehicle V is running on an uphill that has a gradient less than the second predetermined value B, the braking means 30 applies a braking force to the vehicle V under certain requirements shown in Step S6 and Step S7. Even when it is determined in Step S5 that the vehicle V is running on a road of a downward gradient or a horizontal state, application of the braking force is performed under the certain requirements shown in Step S6 and Step S7.

When it is determined in Step S6 that a running speed of the vehicle V is a third predetermined value C or greater, the process proceeds to Step S7. When the running speed of the vehicle V is less than the third predetermined value C, a braking force is not applied to the vehicle.

When it is determined in Step S7 that an acceleration of the vehicle V is a fourth predetermined value D or greater, the process proceeds to Step S8 and the braking means 30 applies a braking force to the vehicle V. When it is determined that the acceleration of the vehicle V is less than the fourth predetermined value D, a braking force is not applied to the vehicle V.

By forcibly applying a braking force using a brake-by-wire in Step S8, a running torque of the vehicle V approaches a value equal to (or equivalent to) a running torque of the vehicle V that is assumed in the state where the temperature rise control is not performed. Thereby, it is possible to suppress an increase in the running torque of the vehicle V even when the generated torque of the engine E is increased due to the temperature rise control. Namely, in the way to activate the exhaust gas purifying device 18, it is possible to suppress a feeling of starting to run, which occurs during running. Further, it is possible to suppress a force of causing the vehicle V to advance by a strong running torque in an idling state or a state where the accelerator opening is small.

Further, since a required torque for the engine E is relatively small in a downhill or horizontal road, quantity of exhaust heat is reduced and therefore the temperature of the exhaust gas is lowered. However, even in this case, it is possible to raise the temperature of the exhaust gas by forcibly applying a braking force using a brake-by-wire to increase a running resistance of the vehicle and operating the engine E in a higher load state.

Although the foregoing description has been made assuming a gasoline engine as the engine E, the present invention may be applied to other engines such as a diesel engine.

## Claims

1. An engine control device comprising:
an operating state determination unit that determines an operating state of an engine mounted on a vehicle;
an exhaust gas temperature detection unit that detects the temperature of the exhaust gas of the engine;
a braking unit that applies a braking force to the vehicle;
an exhaust gas temperature control unit that controls the supply of fuel and air into a combustion chamber and an ignition timing so as to raise the temperature of the exhaust gas up to the temperature required for the activation of an exhaust gas purifying device when the operating state determination unit determines that an elapsed time after the start of the engine is within a predetermined period of time;
a braking control unit that operates the braking unit so as to cause a running torque of the vehicle to be close to a running torque of the vehicle that is assumed in the state where a temperature rise control is not performed, when the exhaust gas temperature control unit performs the temperature rise control of the exhaust gas; and
wherein the vehicle includes an inclination detection unit that detects the inclination in the longitudinal direction of the vehicle, and
the braking unit applies a braking force to the vehicle depending on the gradient situation in an advancing direction of the vehicle, which is detected by the inclination detection unit, when the exhaust gas temperature control unit performs the temperature rise control of the exhaust gas.

2. The engine control device according to claim 1, wherein the temperature rise control of the exhaust gas by the exhaust gas temperature control unit is performed when an accelerator opening is a first predetermined value or less.

3. The engine control device according to claim 1, wherein, when the exhaust gas temperature control unit performs the temperature rise control of the exhaust gas, the exhaust gas temperature control unit advances the ignition timing when the inclination detection unit detects inclination of an upward gradient of a second predetermined value or greater in the advancing direction of the vehicle in a state where the exhaust gas temperature control unit delays the ignition timing.

4. The engine control device according to claim 1 or 3, wherein, when the exhaust gas temperature control unit performs the temperature rise control of the exhaust gas, the braking unit applies a braking force to the vehicle when the inclination detection unit detects inclination of downward gradient or horizontal state to the advancing direction of the vehicle.

5. The engine control device according to any one of claims 1 to 4, wherein, when the exhaust gas temperature control unit performs the temperature rise control of the exhaust gas, the braking unit applies a braking force to the vehicle when the operating state determination unit determines that a running speed of the vehicle is a third predetermined value or greater.

6. The engine control device according to any one of claims 1 to 5, wherein, when the exhaust gas temperature control unit performs the temperature rise control of the exhaust gas, the braking unit applies a braking force to the vehicle when the operating state determination unit determines that an acceleration of the vehicle is a fourth predetermined value or greater.

7. The engine control device according to any one of claims 1 to 6, wherein the braking unit is a braking system by a brake-by-wire.

## Patentansprüche

1. Motorsteuervorrichtung, welche aufweist:
eine Betriebszustandsbestimmungseinheit, welche einen Betriebszustand eines an einem Fahrzeug angebrachten Motors bestimmt,
eine Abgastemperatur-Erfassungseinheit, welche die Temperatur des Abgases des Motors erfasst,
eine Bremseinheit, welche eine Bremskraft auf das Fahrzeug ausübt,
eine Abgastemperatursteuereinheit, welche die Zufuhr von Kraftstoff und Luft zu einer Verbrennungskammer und den Zündzeitpunkt steuert, um die Temperatur des Abgases auf die für die Aktivierung einer Abgasreinigungsvorrichtung benötigte Temperatur zu erhöhen, wenn die Betriebszustandsbestimmungseinheit feststellt, dass die nach dem Start des Motors verstrichene Zeit innerhalb einer vorgegebenen Zeitperiode liegt,
eine Bremssteuereinheit, welche die Bremseinheit betätigt, um zu bewirken, dass das Fahrdrehmoment des Fahrzeugs in der Nähe eines Fahrdrehmoments des Fahrzeugs liegt, das in dem Zustand angenommen wird, in dem keine Temperaturanstiegssteuerung ausgeführt wird, wenn die Abgastemperatursteuereinheit die Temperaturanstiegssteuerung für das Abgas ausführt, und
wobei das Fahrzeug eine Neigungserfassungseinheit aufweist, welche die Neigung in Längsrichtung des Fahrzeugs erfasst, und
die Bremseinheit abhängig von der Gradientensituation in Fortbewegungsrichtung des Fahrzeugs, welche durch die Neigungserfassungseinheit erfasst wird, eine Bremskraft auf das Fahrzeug ausübt, wenn die Abgastemperatursteuereinheit die Temperaturanstiegssteuerung des Abgases ausführt.

2. Motorsteuervorrichtung nach Anspruch 1, wobei die Temperaturanstiegssteuerung für das Abgas durch die Abgastemperatursteuereinheit ausgeführt wird, wenn die Gaspedalöffnung höchstens einen vorgegebenen Wert annimmt.

3. Motorsteuervorrichtung nach Anspruch 1, wobei, wenn die Abgastemperatursteuereinheit die Temperaturanstiegssteuerung für das Abgas ausführt, die Abgastemperatursteuereinheit den Zündzeitpunkt vorzieht, wenn die Neigungserfassungseinheit in einem Zustand, in dem die Abgastemperatursteuereinheit den Zündzeitpunkt verzögert, eine Neigung eines Aufwärtsgradienten, der wenigstens einen zweiten vorgegebenen Wert in Fortbewegungsrichtung des Fahrzeugs annimmt, erfasst.

4. Motorsteuervorrichtung nach Anspruch 1 oder 3, wobei, wenn die Abgastemperatursteuereinheit die Temperaturanstiegssteuerung für das Abgas ausführt, die Bremseinheit eine Bremskraft auf das Fahrzeug ausübt, wenn die Neigungserfassungseinheit eine Neigung mit einem Abwärtsgradienten oder einen horizontalen Zustand in Fortbewegungsrichtung des Fahrzeugs erfasst.

5. Motorsteuervorrichtung nach einem der Ansprüche 1 bis 4, wobei, wenn die Abgastemperatursteuereinheit die Temperaturanstiegssteuerung für das Abgas ausführt, die Bremseinheit eine Bremskraft auf das Fahrzeug ausübt, wenn die Betriebszustandsbestimmungseinheit feststellt, dass die Fahrtgeschwindigkeit des Fahrzeugs wenigstens einen dritten vorgegebenen Wert annimmt.

6. Motorsteuervorrichtung nach einem der Ansprüche 1 bis 5, wobei, wenn die Abgastemperatursteuereinheit die Temperaturanstiegssteuerung für das Abgas ausführt, die Bremseinheit eine Bremskraft auf das Fahrzeug ausübt, wenn die Betriebszustandsbestimmungseinheit feststellt, dass die Beschleunigung des Fahrzeugs wenigstens einen vierten vorgegebenen Wert annimmt.

7. Motorsteuervorrichtung nach einem der Ansprüche 1 bis 6, wobei die Bremseinheit ein Brake-by-Wire-Bremssystem ist.

## Revendications

1. Dispositif de commande de moteur comprenant :
une unité de détermination d'état de fonctionnement qui détermine un état de fonctionnement d'un moteur monté sur un véhicule ;
une unité de détection de température de gaz d'échappement qui détecte la température du gaz d'échappement du moteur ;
une unité de freinage qui applique une force de freinage au véhicule ;
une unité de commande de température de gaz d'échappement qui commande l'apport de carburant et d'air dans une chambre de combustion et un moment d'allumage de manière à faire monter la température du gaz d'échappement jusqu'à la température nécessaire pour l'activation d'un dispositif de purification de gaz d'échappement quand l'unité de détermination d'état de fonctionnement détermine qu'un temps écoulé après le début du moteur se trouve dans une période de temps prédéterminée ;
une unité de commande de freinage qui fait fonctionner l'unité de freinage de manière à amener un couple de marche du véhicule à se rapprocher d'un couple de marche du véhicule qui est adopté dans l'état où une commande de hausse de température n'est pas effectuée, quand l'unité de commande de température de gaz d'échappement effectue la commande de hausse de température du gaz d'échappement ; et
dans lequel le véhicule inclut une unité de détection d'inclinaison qui détecte l'inclinaison dans la direction longitudinale du véhicule, et
l'unité de freinage applique une force de freinage au véhicule en fonction de la situation de gradient dans une direction d'avancée du véhicule, qui est détectée par l'unité de détection d'inclinaison, quand l'unité de commande de température de gaz d'échappement effectue la commande de hausse de température du gaz d'échappement.

2. Dispositif de commande de moteur selon la revendication 1, dans lequel la commande de hausse de température du gaz d'échappement par l'unité de commande de température de gaz d'échappement est effectuée quand une ouverture d'accélérateur est une première valeur prédéterminée ou moins.

3. Dispositif de commande de moteur selon la revendication 1, dans lequel, quand l'unité de commande de température de gaz d'échappement effectue la commande de hausse de température du gaz d'échappement, l'unité de commande de température de gaz d'échappement avance le moment d'allumage quand l'unité de détection d'inclinaison détecte l'inclinaison d'un gradient vers le haut d'une deuxième valeur prédéterminée ou plus dans la direction d'avancée du véhicule dans un état où l'unité de commande de température de gaz d'échappement diffère le moment d'allumage.

4. Dispositif de commande de moteur selon la revendication 1 ou 3, dans lequel, quand l'unité de commande de température de gaz d'échappement effectue la commande de hausse de température du gaz d'échappement, l'unité de freinage applique une force de freinage au véhicule quand l'unité de détection d'inclinaison détecte l'inclinaison d'un gradient vers le bas ou un état horizontal vers la direction d'avancée du véhicule.

5. Dispositif de commande de moteur selon l'une quelconque des revendications 1 à 4, dans lequel, quand l'unité de commande de température de gaz d'échappement effectue la commande de hausse de température du gaz d'échappement, l'unité de freinage applique une force de freinage au véhicule quand l'unité de détermination d'état de fonctionnement détermine qu'une vitesse de marche du véhicule est une troisième valeur prédéterminée ou plus.

6. Dispositif de commande de moteur selon l'une quelconque des revendications 1 à 5, dans lequel, quand l'unité de commande de température de gaz d'échappement effectue la commande de hausse de température du gaz d'échappement, l'unité de freinage applique une force de freinage au véhicule quand l'unité de détermination d'état de fonctionnement détermine qu'une vitesse d'accélération du véhicule est une quatrième valeur prédéterminée ou plus.

7. Dispositif de commande de moteur selon l'une quelconque des revendications 1 à 6, dans lequel l'unité de freinage est un système de freinage par un frein par câble.
